# EUROPÄISCHE PATENTSCHRIFT

(11) **EP 2 547 902 B1**
(45) Veröffentlichungstag und Bekanntmachung des Hinweises auf die Patenterteilung: **23.04.2014**
(21) Anmeldenummer: 11710721.9
(22) Anmeldetag: 11.03.2011
(51) Int. Cl.: F03D 1/06

(54) **ROTORBLATTENTWÄSSERUNG**
ROTOR BLADE DRAIN
DRAINAGE D'UNE PALE DE ROTOR

(30) Priorität: 13.03.2010 DE 102010011275
(43) Veröffentlichungstag der Anmeldung: 23.01.2013
(73) Patentinhaber: Kenersys GmbH, 48155 Münster (DE)
(72) Erfinder: MILLER, Alexander, 48149 Münster (DE)
(74) Vertreter: Michalski Hüttermann & Partner Patentanwälte
(86) Internationale Anmeldenummer: PCT/EP2011/053711
(87) Internationale Veröffentlichungsnummer: WO 2011/113764

(56) Entgegenhaltungen:
- WO-A1-02/48546
- DE-A1-102008 007 910
- JP-A- 2005 105 916

## Beschreibung

Die Erfindung betrifft ein Rotorblatt für eine Windenergieanlage.

Üblicherweise weisen moderne Windenergieanlagen Rotorblätter auf, welche Längen von beispielsweise 40 Metern oder mehr aufweisen können. Die Rotorblätter werden dabei üblicherweise aus Halbschalen hergestellt, wobei zwischen den Halbschalen zumindest teilweise Hohlräume ausgebildet werden. In den Hohlräumen kann es in Folge von Kondensation oder direktem Eindringen von Feuchtigkeit zur Ansammlung von flüssigem Wasser kommen. Das Wasser kann insbesondere im Winter durch Gefrieren oder durch schlagartiges Verdampfen bei einem Blitzschlag zu Schäden an den Rotorblättern führen. Zum Ableiten des Wassers werden daher Öffnungen beispielsweise in der Rotorblattspitze angeordnet, wie dies in DE 10 2004 028 917 A1 gezeigt wird.

Nachteilig bei den bekannten Maßnahmen zur Entwässerung von Rotorblättern ist die mit zunehmender Größe der Entwässerungsöffnungen steigende Lärmenrwicklung, aufgrund der hohen Anströmungsgeschwindigkeit des Rotorblattes. Zudem führen Schmutz und gelöste Kleinteile oftmals zu einem Verstopfen der Entwässerungsöffnungen.

Die JP 2005 105916 A zeigt ein Rotorblatt für eine Windenergieanlage, umfassend einen Rotorblattkörper, der einen Hohlraum umschließt und einen Durchbruch zur Entwässerung des Hohlraumes aufweist, und ein Funktionselement, das mit dem Rotorblattkörper beweglich verbunden und an dem Durchbruch angeordnet ist und von einer geschlossenen Position in eine geöffnete Position überführbar ist.

Die WO 02/48546 A1 und die DE 10 2008 007910 A1 zeigen ebenfalls Rotorblätter für

Es ist die Aufgabe der Erfindung ein Rotorblatt bereitzustellen, welches bei verminderter Lärmentwicklung eine verbesserte Entwässerung aufweist und ein Verstopfen der Entwässerungsöffnungen besser verhindert.

Die Lösung der Aufgabe erfolgt erfindungsgemäß durch die Merkmale des Anspruches 1. Vorteilhafte Ausgestaltungen der Erfindung sind in den Unteransprüchen angegeben.

Das erfindungsgemäße Rotorblatt für eine Windenergieanlage umfasst einen Rotorblattkörper, wobei der Rotorblattkörper einen Hohlraum umschließt, wobei der Rotorblattkörper einen Durchbruch zur Entwässerung des Hohlraumes aufweist, und ein Funktionselement, wobei das Funktionselement mit dem Rotorblattkörper beweglich verbunden und an dem Durchbruch angeordnet ist. Erfindungsgemäß ist das Funktionselement von einer geschlossenen Position in eine geöffnete Position überführbar, wobei das Funktionselement rein translatorisch bewegbar ist.

Das Funktionselement ist bei dem erfindungsgemäßen Rotorblatt derart angeordnet, dass in der geschlossenen Position der Durchbruch zur Entwässerung des Hohlraumes durch das Funktionselement wasserdicht verschlossen oder zumindest abgedeckt ist. In der geöffneten Position ist das Funktionselement derart angeordnet, dass der Durchbruch nicht oder nur teilweise abgedeckt oder verschlossen ist. Das Funktionselement kann dabei massiv, das heißt ohne Hohlraum, ausgebildet sein, eine Ausnehmung aufweisen, oder einen Funktionselementhohlraum umschließend ausgebildet sein. Der Funktionselementhohlraum kann dabei im geschlossenen Zustand durchgängig an den Hohlraum des Rotorblattkörpers angrenzen. Das Überführen des Funktionselementes von der geschlossenen Position in die geöffnete Position kann dabei vorteilhafterweise stufenlos erfolgen. Das Bewegen des Funktionselementes erfolgt dabei in einer rein translatorischen Bewegung entlang einer Längsachse des Rotorblattes oder des Rotorblattkörpers ohne ein Verdrehen oder Rotieren des Funktionselementes um die Längsachse des Rotorblattes oder des Rotorblattkörpers. In der geöffneten Position öffnet das Funktionselement den Durchbruch zumindest teilweise, so dass beispielsweise Wasser oder Kleinteile aus dem Hohlraum durch den Durchbruch hindurch aus dem Rotorblatt heraus gelangen können.

Vorteilhaft bei der erfindungsgemäßen Ausgestaltung des Rotorblattes ist, dass ein Durchbruch mit einer großen Öffnung zur besseren Entwässerung des Hohlraumes des Rotorblattes vorgesehen werden kann. Eine Lärmentwicklung aufgrund des großen Durchbruches wird dadurch vermieden, dass der Durchbruch im normalen Betrieb der Windenergieanlage durch das Funktionselement wasserdicht verschlossen oder zumindest abgedeckt ist, wodurch der Durchbruch nicht direkt von der Luft angeströmt werden kann, außer wenn bei Bedarf das Funktionselement für einen kurzen Zeitraum in die geöffnete Position überführt wird. Zudem kann durch einen großen Durchbruch gewährleistet werden, dass auch Schmutz oder Kleinteile, welche beispielsweise bei der Wartung der Windenergieanlage in den Hohlraum eines Rotorblattes fallen können, sicher aus dem Hohlraum entfernt werden können, wobei ein Verstopfen des Durchbruchs vermieden werden kann. Dadurch wird eine Beschädigung der Rotorblätter durch in dem Hohlraum gesammeltes Wasser beispielsweise im Winter durch Gefrieren oder durch Verdampfen bei einem Blitzschlag vermieden. Darüber hinaus bietet das rein translatorische, rotationsfreie Überführen des Funktionselementes von der geschlossenen Position in die geöffnete Position den Vorteil, dass es zu keiner wesentlichen Veränderung des Anströmungswinkels des Funktionselementes und somit nur zu einer sehr geringe aerodynamischen Beeinflussung des Rotorblattes kommt. Dadurch wird eine wesentliche Leistungsänderung der Windenergieanlage, beispielsweise durch ein Abbremsen der Rotorblätter, vermieden.

Bevorzugt ist vorgesehen, dass der Durchbruch radial außen an dem Rotorblatt angeordnet ist. Dadurch dass Wasser oder auch Schmutz oder Kleinteile in dem Hohlraum beim Betrieb der Windenergieanlage durch die Fliehkraft radial nach außen bewegt werden, kann durch die Anordnung des Durchbruchs radial außen an dem Rotorblattkörper eine zuverlässige Entwässerung sichergestellt werden.

In einer besonders bevorzugten Ausgestaltung der Erfindung ist der Durchbruch an einem radial äußeren Ende des Rotorblattkörpers quer zur Längsrichtung des Rotorblattkörpers ausgebildet. Der Durchbruch kann dabei in einer Fläche, welche quer oder im Wesentlichen rechtwinklig zu der Längsrichtung des Rotorblattkörpers angeordnet ist, beispielsweise einer Querschnittsfläche des Rotorblattkörpers, ausgebildet sein. Durch die Anordnung des Durchbruches in der Querschnittsfläche des Rotorblattkörpers an einem in Längsrichtung des Rotorblattkörpers radial äußeren Ende des Rotorblattkörpers kann eine vollständige Entwässerung des Hohlraumes des Rotorblattkörpers erreicht werden.

Weiterhin ist nach einer bevorzugten Ausgestaltung vorgesehen, dass das Funktionselement als Spitze des Rotorblattes ausgeformt ist und in der geschlossenen Position eine Oberfläche des Funktionselementes oberflächenbündig mit einer Außenfläche des Rotorblattkörpers ausgebildet ist. Durch die Ausformung des Funktionselementes als Spitze des Rotorblattes kann zum einen der Durchbruch zur Entwässerung an dem äußeren Ende des Rotorblattkörpers angeordnet werden und so eine vollständige Entwässerung des Hohlraumes ermöglichen ohne aerodynamische Aspekte bei der Ausgestaltung des radial äußeren Endes des Rotorblattkörpers zu berücksichtigen, da der Durchbruch durch das Funktionselement im normalen Betrieb abgedeckt ist. Das Funktionselement kann dabei unter aerodynamischen Gesichtspunkten beispielsweise als bewegliche Rotorblattspitze ausgestaltet sein, um Leistungsverluste der Windenergieanlage beispielsweise durch Wirbelbildung zu vermeiden. Dies wird in der geschlossenen Position insbesondere durch ein oberflächenbündiges Anliegen der Oberfläche des Funktionselementes an der Außenfläche des Rotorblattkörpers gewährleistet, wodurch der Rotorblattkörper mit dem an den Rotorblattkörper anliegenden Funktionselement wie ein Gesamtkörper strömungsgünstig ohne wesentliche aerodynamische Störungen und Leistungsverluste anströmbar ist. Die Flächen des Rotorblattkörpers und/oder des Funktionselementes welche in der geöffneten Position anströmbar sind können ebenfalls aerodynamisch strömungsgünstig ausgebildet sein, um beispielsweise Strömungsgeräusche aufgrund von Verwirbelungen zu vermindern. Das als Rotorblattspitze ausgeformte Funktionselement kann dabei hohl ausgebildet sein, wobei der so gebildete und vom Funktionselement umschlossene Funktionselementhohlraum im geschlossenen Zustand durchgängig mit dem Hohlraum des Rotorblattkörpers angeordnet sein kann.

Ferner ist bevorzugt vorgesehen, dass das Funktionselement über eine Steuervorrichtung ansteuerbar ist. Dadurch kann das Funktionselement gezielt bewegt werden, um beispielsweise eine bedarfsgerechte Öffnung des Durchbruches zur Entwässerung zu erreichen. Das Funktionselement kann dabei beispielsweise für ein bestimmtes Zeitintervall in der geöffneten Position verbleiben, bevor der Durchbruch wieder verschlossen wird. Die Steuervorrichtung kann dabei mit dem Funktionselement und einer Stelleinheit verbunden sein. Die Stelleinheit erzeugt die, beispielsweise im Betrieb der Windenergieanlage, zum Halten des Funktionselementes beispielsweise in der geschlossenen Position benötigten Kräfte. Die Stelleinheit erzeugt ebenso die zum Bewegen des Funktionselementes aus einer geschlossenen Position in eine geöffnete Position oder umgekehrt benötigten Kräfte. Die Stelleinheit kann sowohl im Betrieb der Windenergieanlage, das heißt bei rotierenden Rotorlättern, als auch bei nicht rotierenden Rotorblättern die benötigten Kräfte erzeugen. Ferner kann die Steuerung in Bezug auf den Anlagenbetrieb geregelt werden, so dass beispielsweise bei schwachem Wind und/oder im Trudelbetrieb automatisch das jeweils nach unten in Richtung Erdboden weisende Funktionselement von der Steuerung angesteuert und geöffnet wird. Die Kräfte werden über die Steuervorrichtung auf das Funktionselement übertragen und das Funktionselement ist dadurch rein translatorisch bewegbar. Die Steuervorrichtung kann beispielsweise hydraulisch und/oder pneumatisch ausgestaltet sein. Weiterhin kann die Steuervorrichtung elektrisch und/oder mechanisch, beispielsweise in Form eines Seilzuges ausgebildet sein. Auf den Seilzug beispielsweise radial nach innen gerichtet wirkende Zugkräfte können mittels einer Umlenkung des Seils um beispielsweise 180° innerhalb des Hohlraums des Rotorblattkörpers radial nach außen gerichtete Kräfte auf den mit dem Funktionselement verbundenen Seilzug aufbringen. Dadurch kann das Funktionselement radial nach außen gerichtet in die geöffnete Position verbracht werden. Im Betrieb der Windenergieanlage kann das Funktionselement beispielsweise durch auftretende und auf das Funktionselement wirkende Fliehkräfte von der geschlossenen Position in die geöffnete Position bewegt werden. Die Steuervorrichtung kann mit Federn verbunden sein, wobei die Federn eine radial nach innen gerichtet Kraft bereitstellen, wodurch ein Verbringen und/oder Halten des Funktionselementes in der geschlossenen Position gewährleistet werden kann. Ferner kann die Steuervorrichtung aus einem elektrisch leitenden Material, beispielsweise Metall, hergestellt und geerdet sein und als Blitzleiter dienen.

In einer besonders bevorzugten Ausgestaltung der Erfindung ist die Steuervorrichtung in Form einer Steuerstange ausgebildet. Die Steuerstange kann dabei aus einem einteiligen oder mehrteiligen Gestänge ausgebildet sein. Die Steuerstange ist mit dem Funktionselement und einer Stelleinheit verbunden, wobei die Stelleinheit die Stellkräfte zum Bewegen des Funktionselementes erzeugt. Besonders vorteilhaft ist dabei, dass durch einen einfachen mechanischen Aufbau sowohl die Kräfte zum Überführen des Funktionselementes sowohl in die geöffnete Position als auch die Rückstellkräfte zum Überführen des Funktionselementes in die geschlossene Position von der Stelleinheit auf das Funktionselement übertragbar sind. Die Steuerstange ermöglicht dabei die Anordnung der krafterzeugenden Stelleinheit radial innen von dem Rotorblatt weg von der Rotorblattspitze, beispielsweise im Bereich einer Rotorblattaufhängung. Dadurch kann das Einwirken dynamischer Kräfte durch das Gewicht der Stelleinheit auf das Rotorblatt im Betrieb verringert werden. Die Steuerstange kann aus einem elektrisch leitenden Material, beispielsweise Metall, hergestellt und geerdet sein und als Blitzleiter dienen.

In einer bevorzugten Ausgestaltung der Erfindung ist das Funktionselement elektrisch leitend ausgestaltet und geerdet. Dadurch kann das Funktionselement, beispielsweise in Form eines metallisches Gussbauteils oder Fräsbauteils, als Blitzfänger verwendet werden. Durch Erdung des Funktionselementes, beispielsweise durch eine Verbindung des Funktionselementes mit einem Blitzleiter, kann ein sicheres Ableiten von elektrischer Energie ermöglicht werden und eine Beschädigung des Rotorblattes oder der Windenergieanlage, beispielsweise durch Blitzschlag, vermieden werden.

In einer weiteren bevorzugten Ausgestaltung der Erfindung ist das Funktionselement aus Verbundkunststoffen gefertigt. Dadurch wird die Herstellung besonders leichter und belastbarer Funktionselemente ermöglicht. Durch das reduzierte Gewicht gegenüber beispielsweise metallischen Funktionselementen können zudem die dynamischen Kräfte, welche auf den Rotorblattkörper wirken, reduziert werden. In die Verbundwerkstoffe können elektrisch leitende Materialien eingebettet werden, welche geeignet sind, als Blitzfänger und/oder Blitzleiter zu wirken.

Ferner ist bevorzugt vorgesehen, dass das Funktionselement mit einem Befestigungseinsatz beweglich verbunden ist, wobei die Form des Befestigungseinsatzes an den Hohlraum des Rotorblattkörpers angepasst ist und der Befestigungseinsatz in den Hohlraum einfügbar ist. Der Befestigungseinsatz kann in den Hohlraum des Rotorblattkörpers eingesetzt und mit dem Rotorblattkörper verbunden werden. Dadurch kann beispielsweise ein herkömmliches Rotorblatt mit einem erfindungsgemäßen beweglichen Funktionselement nachgerüstet werden. Dies kann beispielsweise durch Abtrennen der ursprünglichen Rotorblattspitze und Einsetzen des Befestigungseinsatzes mit dem damit verbundenen Funktionselement, beispielsweise in Form eines Einsatzes oder Inserts, welches dann eine rein translatorisch bewegbare Rotorblattspitze bildet, erfolgen.

Die Erfindung betrifft ferner eine Windenergieanlage mit einem Rotorblatt nach einem der Ansprüche 1 bis 9. Das Rotorblatt kann dabei wie zuvor beschrieben aus- und weitergebildet sein. Mit Hilfe des erfindungsgemäßen Rotorblattes kann bei verminderter Lärmentwicklung eine verbesserte Entwässerung erreicht werden und ein Verstopfen der Entwässerung besser verhindert werden.

Nachfolgend wird die Erfindung unter Bezugnahme auf die anliegende Zeichnung näher erläutert.

Es zeigt:

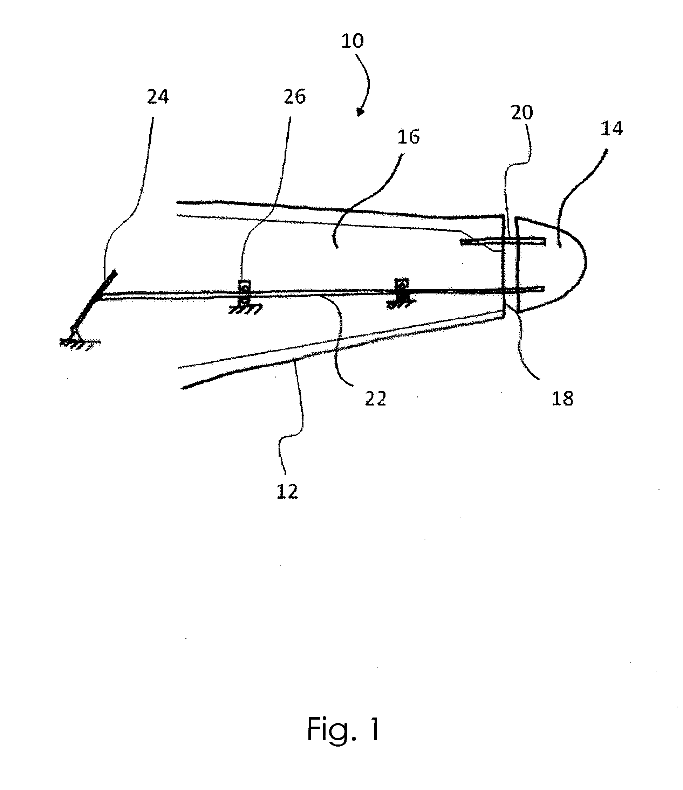

Fig. 1 eine schematische Darstellung eines erfindungsgemäßen Rotorblattes.

In Fig. 1 ist ein erfindungsgemäßes Rotorblatt 10 für eine Windenergieanlage in einer geöffneten Position dargestellt. Das Rotorblatt 10 umfasst einen Rotorblattkörper 12 und ein Funktionselement 14. Der Rotorblattkörper 12 umschließt einen Hohlraum 16 und weist einen Durchbruch 18 auf, welcher den Hohlraum 16 in der geöffneten Position mit der Umgebung durchlässig verbindet. Das Funktionselement 14 ist in der geöffneten Position beabstandet zu dem Rotorblattkörper 12 dargestellt und gibt in dieser geöffneten Position den Durchbruch 18 frei, wodurch der Hohlraum 16 des Rotorblattkörpers 12 durchlässig mit der Umgebung verbunden ist. Das Funktionselement 14 ist über eine Führung 20 und eine Steuervorrichtung in Form einer Steuerstange 22, welche in dem Hohlraum 16 über Lager 26 gelagert ist, mit dem Rotorblattkörper 12 verbunden und in dem Rotorblattkörper 12 geführt. Das Funktionselement 14 ist dabei derart gefiihrt, dass das Funktionselement 14 bei der Überführung von der geöffneten Position in eine geschlossene Position und umgekehrt nur eine rein translatorische, rotationsfreie Bewegung in Längsrichtung des Rotorblattkörpers 12 durchführen kann. Die Steuerstange 22, über welche die rein translatorische Bewegung des Funktionselementes 14 gesteuert wird, ist mit einer, hier nur schematisch dargestellten, Stelleinheit 24 verbunden. Die Stelleinheit 24 erzeugt die insbesondere im Betrieb der Windenergieanlage benötigten Kräfte zum rein translatorischen Bewegen des Funktionselementes 14. Die Stelleinheit 24 erzeugt auch die im Betrieb der Windenergieanlage benötigten Kräfte zum Halten des Funktionselementes 14 in der geschlossenen Position.

### BEZUGSZEICHENLISTE

- 10: Rotorblatt
- 12: Rotorblattkörper
- 14: Funktionselement
- 16: Hohlraum
- 18: Durchbruch
- 20: Führung
- 22: Steuerstange
- 24: Stelleinheit
- 26: Lagerung

## Patentansprüche

1. Rotorblatt für eine Windenergieanlage, umfassend
einen Rotorblattkörper (12), der einen Hohlraum (16) umschließt und einen Durchbruch (18) zur Entwässerung des Hohlraumes (16) aufweist, und
ein Funktionselement (14), das mit dem Rotorblattkörper (12) beweglich verbunden und an dem Durchbruch (18) angeordnet ist und von einer geschlossenen Position in eine geöffnete Position überführbar ist,
**dadurch gekennzeichnet, dass**
das Funktionselement (14) rein translatorisch bewegbar ist.

2. Rotorblatt nach Anspruch 1, **dadurch gekennzeichnet, dass** der Durchbruch (18) radial außen an dem Rotorblattkörper (12) angeordnet ist.

3. Rotorblatt nach Anspruch 1 oder 2, **dadurch gekennzeichnet, dass** der Durchbruch (18) an einem radial äußeren Ende des Rotorblattkörpers (12) quer zur Längsrichtung des Rotorblattkörpers (12) ausgebildet ist.

4. Rotorblatt nach einem der Ansprüche 1 bis 3, **dadurch gekennzeichnet, dass** das Funktionselement (14) als Spitze des Rotorblattes (10) ausgeformt ist und in der geschlossenen Position eine Oberfläche des Funktionselementes (14) oberflächenbündig mit einer Außenfläche des Rotorblattkörpers (12) ausgebildet ist.

5. Rotorblatt nach einem der Ansprüche 1 bis 4, **dadurch gekennzeichnet, dass** das Funktionselement (14) über eine Steuervorrichtung ansteuerbar ist.

6. Rotorblatt nach Anspruch 5, **dadurch gekennzeichnet, dass** die Steuervorrichtung in Form einer Steuerstange (22) ausgebildet ist.

7. Rotorblatt nach einem der Ansprüche 1 bis 6, **dadurch gekennzeichnet, dass** das Funktionselement (14) elektrisch leitend ausgestaltet und geerdet ist.

8. Rotorblatt nach einem der Ansprüche 1 bis 7, **dadurch gekennzeichnet, dass** das Funktionselement (14) aus Verbundkunststoffen gefertigt ist.

9. Rotorblatt nach einem der Ansprüche 1 bis 8, **dadurch gekennzeichnet, dass** das Funktionselement (14) mit einem Befestigungseinsatz beweglich verbunden ist, wobei die Form des Befestigungseinsatzes an den Hohlraum (16) des Rotorblattkörpers (12) angepasst ist und der Befestigungseinsatz in den Hohlraum (16) einfügbar ist.

10. Windenergieanlage, umfassend mindestens ein Rotorblatt (10) nach einem der Ansprüche 1 bis 9.

## Claims

1. Rotor blade for a wind power plant, comprising a rotor blade body (12) which encloses a cavity (16) and has an opening (18) for draining the cavity (16), and a functional element (14) which is movably connected to the rotor blade body (12) and is arranged on the opening (18) and is transferable from a closed position into an open position, **characterized in that** the functional element (14) is movable in a purely translatory manner.

2. Rotor blade according to Claim 1, **characterized in that** the opening (18) is arranged radially on the outside of the rotor blade body (12).

3. Rotor blade according to Claim 1 or 2, **characterized in that** the opening (18) is formed transversely with respect to the longitudinal direction of the rotor blade body (12) at a radially outer end of the rotor blade body (12).

4. Rotor blade according to one of Claims 1 to 3, **characterized in that** the functional element (14) is formed as a tip of the rotor blade (10) and, in the closed position, a surface of the functional element (14) is formed flush with an outer surface of the rotor blade body (12).

5. Rotor blade according to one of Claims 1 to 4, **characterized in that** the functional element (14) is activatable via a control device.

6. Rotor blade according to Claim 5, **characterized in that** the control device is in the form of a control rod (22).

7. Rotor blade according to one of Claims 1 to 6, **characterized in that** the functional element (14) is designed to be electrically conductive and is earthed.

8. Rotor blade according to one of Claims 1 to 7, **characterized in that** the functional element (14) is manufactured from composite plastics.

9. Rotor blade according to one of Claims 1 to 8, **characterized in that** the functional element (14) is movably connected to a fastening insert, wherein the shape of the fastening insert is matched to the cavity (16) of the rotor blade body (12) and the fastening insert is fittable into the cavity (16).

10. Wind power plant, comprising at least one rotor blade (10) according to one of Claims 1 to 9.

## Revendications

1. Pale de rotor pour une installation d'énergie éolienne, comprenant :
un corps de pale de rotor (12), qui enveloppe un espace creux (16) et présente une percée (18) pour évacuer de l'eau de l'espace creux (16), et
un élément fonctionnel (14), qui est relié de manière mobile au corps de pale de rotor (12) et est disposé au niveau de la percée (18) et peut être passé d'une position fermée à une position ouverte,
**caractérisée en ce que**
l'élément fonctionnel (14) peut être déplacé en mouvement de translation pur.

2. Pale de rotor selon la revendication 1, **caractérisée en ce que** la percée (18) est disposée radialement à l'extérieur au niveau du corps de pale de rotor (12).

3. Pale de rotor selon les revendications 1 ou 2, **caractérisée en ce que** la percée (18) est réalisée au niveau d'une extrémité extérieure radiale du corps de pale de rotor (12) transversalement à la direction longitudinale du corps de pale de rotor (12).

4. Pale de rotor selon une des revendications 1 à 3, **caractérisée en ce que** l'élément fonctionnel (14) est façonné en tant que pointe de la pale de rotor (10) et dans la position fermée une surface de l'élément fonctionnel (14) est réalisée en affleurement de surface avec une surface extérieure du corps de pale de rotor (12).

5. Pale de rotor selon une des revendications 1 à 4, **caractérisée en ce que** l'élément fonctionnel (14) peut être commandé par l'intermédiaire d'un dispositif de commande.

6. Pale de rotor selon la revendication 5, **caractérisée en ce que** le dispositif de commande est réalisé sous forme d'une tige de commande (22).

7. Pale de rotor selon une des revendications 1 à 6, **caractérisée en ce que** l'élément fonctionnel (14) est électriquement conducteur et mis à la terre.

8. Pale de rotor selon une des revendications 1 à 7, **caractérisée en ce que** l'élément fonctionnel (14) est fabriqué à partir de matières plastiques composites.

9. Pale de rotor selon une des revendications 1 à 8, **caractérisée en ce que** l'élément fonctionnel (14) est relié de manière mobile à un insert de fixation, la forme de l'insert de fixation étant adaptée à l'espace creux (16) du corps de pale de rotor (12) et l'insert de fixation pouvant être inséré dans l'espace creux (16).

10. Installation d'énergie éolienne, comprenant au moins une pale de rotor (10) selon une des revendications 1 à 9.
